# EUROPEAN PATENT SPECIFICATION

(11) **EP 2 193 023 B1**
(45) Date of publication and mention of the grant of the patent: **03.08.2011**
(21) Application number: 09772121.1
(22) Date of filing: 26.06.2009
(51) Int. Cl.: B32B 15/08, B29C 45/16, B60R 13/00

(54) **PLASTIC/METAL COMPOSITE**
KUNSTSTOFF-METALL-VERBUNDSTOFF
COMPOSITE PLASTIQUE/MÉTAL

(30) Priority: 01.07.2008 EP 08011882
(43) Date of publication of application: 09.06.2010
(73) Proprietor: CCL Design GmbH, 42653 Solingen (DE)
(72) Inventor: VAHLE, Tobias, 42781 Haan (DE); FLEISSNER, Peter, 55232 Alzey (DE)
(74) Representative: Albrecht, Ralf
(86) International application number: PCT/EP2009/004642
(87) International publication number: WO 2010/000421

(56) References cited:
- EP-A- 0 802 031
- EP-A- 1 488 958
- WO-A-2005/061203
- US-B1- 6 264 869

## Description

The present invention relates to a plastic/metal composite, in particular for use in motor vehicles, having a metallic decorative layer and a plastic layer as a supporting layer which is connected to the decorative layer by means of a spraying, injection moulding or pressing method. Furthermore, the invention relates to a method of producing this type of plastic/metal composite.

It is generally known to injection mould around or behind decorative elements made of metal with plastic. These types of metal/plastic composite are used where a low own weight is desired at the same time as a high-quality appearance. This is the case, for example, when designing a vehicle interior. Here, for example, loudspeaker covers, ventilation covers, trim strips and similar are often made of stainless steel or aluminium optics. This decorative layer can also be provided with additional symbols by etching or imprinting with multi-coloured decorative elements, by means of which a wide range of designs can be produced.

In order keep fuel consumption as low as possible one should also strive to keep the weight of these trim parts as small as possible. Due to the appearance of the plastic, which in normal cases can not fulfil the high requirements made of decorative surfaces, the visible surface is formed, for example, by aluminium sheet parts.

In to keep the fuel consumption as low as possible it is at the same time desirable to keep the weight of the composites as low as possible. Because of the appearance of the plastic not meeting the requirements being exacted to decorative surfaces the visible surface region is for example of sheets of aluminum. In order at the same time to keep the weight and the costs of the component as low as possible the metal should be as thin as possible for example only the visible surface regions should be made of metal sheet. This is often associated with a certain problem relating to stability in the component, and this is countered in the prior art by a supporting layer being provided beneath the decorative layer in order to stabilise the component. The most light but stable possible plastic material is chosen for the supporting layer. A further advantage of this is a substantially greater freedom of design due to the substantially simpler and more flexible processability of plastic such that adaptation to different installation geometries and differently formed installation spaces within the vehicle are also possible.

In the prior art the decorative layer and the supporting layer are often initially produced separately, an indentation being formed in the supporting layer into which when assembling the decorative layer an adhesive strip can first of all be inserted in order to connect the supporting layer and the decorative layer to one another over this adhesive strip. Between the decorative layer and the supporting layer a gap inevitably builds up in which dirt and water may congregate which are also difficult to remove. The requirements arising for these metal/plastic composites during alternating climate tests between -40°C and 80°C can often not be fulfilled due to the material-locking connection of the components either due to ageing of the adhesive used or also due to the impossibility of relative movement between the components and the consequence of stresses due to different heat expansion coefficients.

The adhesive strip to be used in order to attach the aluminium rail is associated with further disadvantages. On the one hand it constitutes both a considerable cost factor during production and then during assembly. Furthermore, some plastic surface such as, for example, polypropylene(PP) surfaces, due to their low surface tension, can only be reliably stuck down with this type of adhesive strip if they are previously subjected to pretreatment, for example the application of a primer or corona or flame treatment, and this is also associated with additional labour and material costs.

In order to counter these disadvantages it was proposed in the prior art to injection-mould plastic around the decorative layer, and in so doing surround it such that the layers are already securely connected to one another while injection moulding them. However, the disadvantage of this procedure is that when producing the composite, in particular due to the different shrinkage characteristics, substantial stresses occur in the component by means of which the decorative layer can be bent wrong.

Therefore, it was proposed in the prior art, e.g. document EP 1 488 958 A1 to develop a composite component in which an intermediate layer is disposed between the metallic layer and the plastic supporting layer so as to thus provide decoupling between the metallic layer and the plastic layer, and therefore to compensate stresses due to the different longitudinal extensions of the compolite materials because of the different elasticity modules of the metallic layer and the plastic layer. This manufactuing step ensures that with an appropriate choice of material for the intermediate layer distortion is compensated, however the manufacturing process for these decorative components turns out to be exceptionally expensive. Moreover, the process management of this type of multi-component/plastic injection-moulding procedure in combination with a metallic decorative layer proves to be exceptionally difficult because the different shrinkage characteristics of now three different material types during cooling of the component from the injection temperature to ambient temperature must be taken into account in the process management, buckling of the decorative layer or also the formation of gaps between the plastic layer and the decorative layer often occurring as a result.

It is therefore an object of the present invention to provide a plastic/metal composite and a method of producing the latter which, with simple process management, successfully prevents distortion of the component as a result of shrinkage.

This object is achieved according to the invention in that at the level of a peripheral region of the metallic decorative layer at least one recess in the form of a shrinkage pocket is provided in the supporting layer which enables relative movement between the decorative layer and the supporting layer during cooling in order to compensate different shrinkage characteristics of the decorative layer and the supporting layer during cooling after production.

In other words, the amplified shrinkage characteristics of the plastic during cooling from the injection temperature, which with a majority of plastics used is between 260°C and 280°C, to ambient temperature are compensated by shrinkage pockets being provided in the longitudinal and/or lateral direction along the peripheral regions of the decorative layer, which enable a specific relative movement between the supporting layer and the decorative layer during cooling so that the shrinkages of the plastic both within and outside of the cavity do not apply any stresses to the decorative layer because due to the shrinkage, the space provided by the shrinkage pockets initially prevents buckling of the decorative layer.

In order to enable the least obstructed possible relative movement of the layers during shrinkage caused by cooling, in one exemplary embodiment the shrinkage pockets are arranged in the supporting layer such that they lay open at least a partial section of the peripheral region of at least one face side of the decorative layer, in particular of the face side in the region of the greatest shrinkage of the supporting layer.

In one exemplary embodiment of the present invention the shrinkage pocket is formed on the side of the supporting layer facing away from the decorative layer, and so on the non-visible side of the plastic/metal composite.

If the dimensions of the shrinkage pocket, in particular a space left free by the shrinkage pocket between the face side of the decorative layer and the supporting layer, are advantageously adapted to the shrinkage ratio of the decorative layer to the supporting layer, it is possible for the shrinkage pocket to be as small as possible after the cooling of the component so that any weakening of the component is as slight as possible.

Alternatively however, it is also possible to design the shrinkage pocket to be as large as possible in order to reduce the weight of the plastic/metal component, and for example to lay open the peripheral region of the decorative layer to such an extent that only one or a few attachment bars remain for the positioning of the decorative layer in the supporting layer. This requires a balance between fulfilment of the supporting function and so the stability of the component in relation to the weight reduction.

In one preferred exemplary embodiment the shrinkage pocket has at least a width which corresponds to half of the difference between the shrinkage paths respectively covered by the decorative layer and the supporting layer which result from the different longitudinal expansion coefficients of the decorative layer and the supporting layer.

In order to take into account the different shrinkage characteristics of the decorative layer and the supporting layer during cooling after production, and in so doing to not restrict the supporting function and so the stability of the component, in one exemplary embodiment the shrinkage pocket is formed in an end region facing towards the supporting layer following the contours of the decorative layer.

In order to also be able to compensate different shrinkage characteristics of the supporting layer and the decorative layer laterally to the longitudinal extension of the plastic/metal composite, in one exemplary embodiment the supporting layer has at least one spring element which resiliently compensates relative movements between the supporting layer and the decorative layer by compensation movements laterally to the longitudinal extension of the decorative layer.

A particularly simple form of providing this type of spring element is achieved by the spring element being formed by a bar, in particular S-shaped, formed in the supporting layer. Other embodiments of the bar, such as for example an arrangement, inclined in relation to the longitudinal extension of the decorative layer, of a bar, for example in the form of a rod, or other geometric embodiments of the bar, are also possible in order to resiliently compensate relative movements between the supporting layer and the decorative layer.

In particular with longer plastic/metal composites it can be advantageous to form a number of spring elements in the supporting layer which are disposed in particular at equal intervals along the longitudinal extension of the composite.

In a further exemplary embodiment of the present invent tion positioning means, in particular positioning lugs or hooks, are formed at the decorative layer and/or the supporting layer. Here the positioning means are advantageously arranged such that they allow a shrinkage compensating relative movement between the components, and on the other hand, however, prevent a shift of the components deviating from the shrinkage compensating relative movement.

In order to enable the simplest possible cleaning of the decorative surface, in a further exemplary embodiment the supporting layer can be designed to be slanted in the crossover to the decorative layer.

In a further exemplary embodiment of the present invention the plastic/metal composite has at least one covering element which can be inserted into the shrinkage pocket such that it at least partially covers the shrinkage pocket.

In order to produce the plastic/metal composite a supporting layer is first of all connected to the metallic decorative layer injection moulding around the metallic decorative layer using a spraying, injection moulding or pressing method, the injection moulding or pressing tool being designed such that while injection moulding around in the region of the end sections of the metallic decorative layer at least one recess is provided in the supporting layer in the form of a shrinkage pocket which enables relative movement between the decorative layer and the supporting layer during cooling in order to compensate distortion of the components due to unwanted material displacement caused by the different shrinkage characteristics of the decorative layer and the supporting layer during cooling after manufactuturing the latter. This can be achieved, for example, by one or more corresponding projections being formed in the tool at the level of the end or peripheral regions of the decorative layer.

In order to also be able to react to different shrinkage characteristics of the decorative layer and the supporting layer laterally to the longitudinal extension by compensation movements in the supporting layer, at least one spring element can be formed in the supporting layer while injection moulding the latter. This spring element can be formed, for example, by an S-shaped bar.

With regard to further advantageous embodiments of the present invention reference is made to the sub-claims and to the following description of an exemplary embodiment by means of the attached drawings. These show as follows:
- Figure 1: a plastic/metal composite according to the in- vention;
- Figure 2: an enlarged partial illustration of the compos- ite according to Figure 1 as a section; and
- Figure 3: a partial illustration of a plastic/metal com- posite according to the invention from below with S-shaped spring elements.

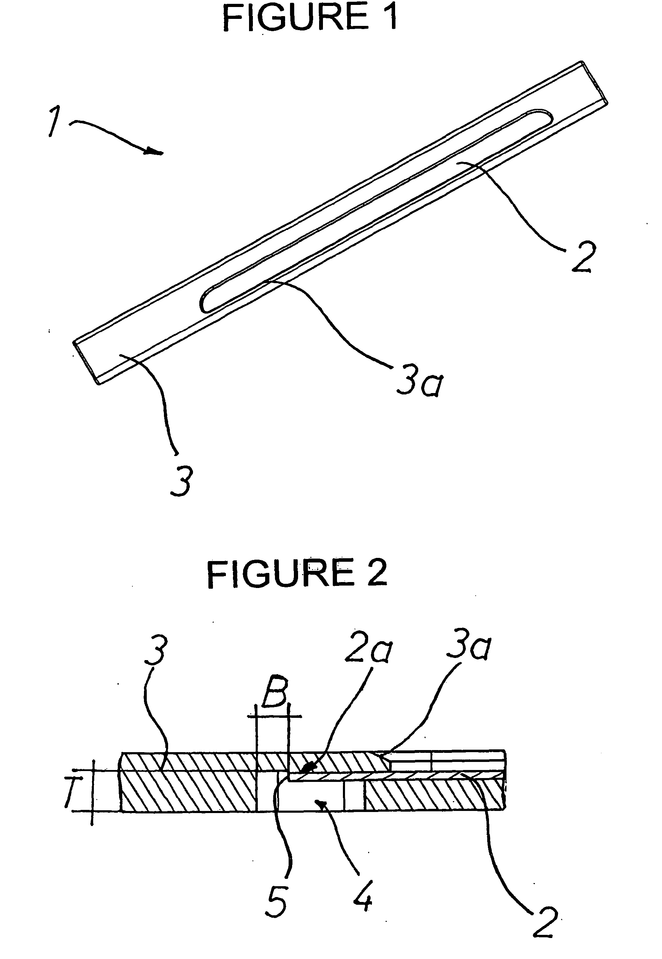

Figure 1 shows a plastic/metal composite according to the invention in the form of a decorative kicking plate 1 for a motor vehicle.

The kicking plate 1 has a decorative layer 2 made of aluminium which is surrounded and enclosed by a supporting layer 3 made of plastic. In the cross-over region between the supporting layer 3 and the decorative layer 2 slants 3a are formed which facilitate the cleaning of dust or dirty water off of the region of the decorative layer 2 visible to a driver, and at the same time provide an aesthetically pleasing and high-quality appearance.

This decorative layer 2 is in the form of an opaque aluminium layer. In a further exemplary embodiment, not shown, translucent regions and recesses, for example in the form of characters or symbols, are provided in the decorative layer, and these can be illuminated by illuminants disposed behind the supporting layer 3 or on the supporting layer 3. The decorative layer 2 can of course also be provided with additional symbols by etching or imprinting with multi-coloured decorative elements, or a pattern can also be stamped into the surface by means of which a wide variety of designs can be produced.

Figure 2 shows, as a section, an enlarged partial illustration of the kicking plate 1 according to Figure 1. In order to compensate the different shrinkage characteristics of the decorative layer 2 and the supporting layer 3 when cooling the kicking plate 1, shrinkage pockets 4 are formed on peripheral regions of the metallic decorative layer 2 in the supporting layer 3. The shrinkage pockets 4 have a width B which corresponds to half of the difference between the shrinkage paths respectively covered by the decorative layer 2 and the supporting layer 3 which result from the different longitudinal expansion coefficients of the decorative layer and the supporting layer. The depth T of the shrinkage pocket 4 is designed such that the face side 5 of the peripheral region 2a of the decorative layer 2 does not come into contact with the supporting layer 3. In other words, the shrinkage pocket 4 is positioned such that it lays open the partial section of the peripheral region 2a of the face side 5 of the decorative layer 2 perpendicularly to the longitudinal extension of the supporting layer 3, and so in the region of the greatest shrinkage of the supporting layer 3. In this way the face side 5 of the peripheral region 2a of the supporting layer 2 is not covered by the supporting layer 3, and a relative movement between the decorative layer 2 and the supporting layer 3 is facilitated.

In the decorative layer 2 positioning means, not shown here, are formed in the form of positioning lugs. These positioning lugs are arranged such that they allow a shrinkage-compensating relative movement between the components, and on the other hand, however, block a shift in the components deviating from the shrinkage-compensating relative movement.

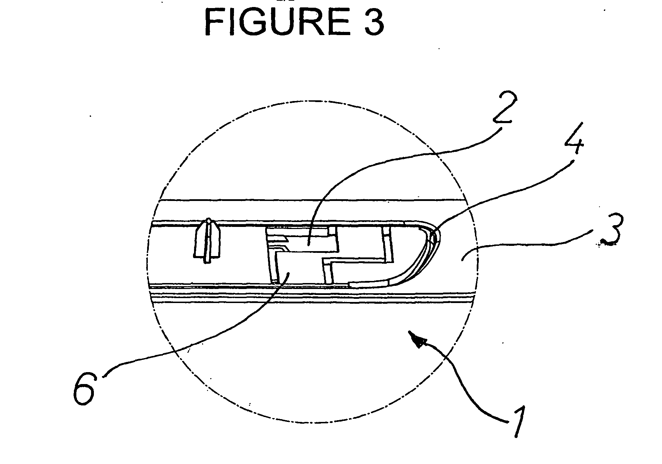

Figure 3 shows a partial illustration of a further exemplary embodiment of a plastic/metal composite 1 according to the invention in which spring elements 6 in the form of S-shaped bars are provided in the supporting layer 3. By means of this type of arrangement of the spring elements 6 different shrinkage characteristics of the decorative layer 2 and the supporting layer 3 lateral to the longitudinal extension of the latter during cooling after production can be compensated by corresponding compensation movements being implemented by the S-shaped flexible bars. By means of the S-shaped design of the bars relative movements between the supporting layer 3 and the decorative layer 2 can be compensated resiliently. The resilient property of the bars is further supported by the S-shaped design.

As can be gathered, furthermore, from Figure 3, in this exemplary embodiment the shrinkage pockets 4 are formed at the level of the peripheral regions 2a of the metallic decorative layer following the contours.

Production of the decorative element 1 in the form of a kicking plate takes place as follows. First of all the decorative layer 2 is produced by means of production methods known from the prior art and, if appropriate, is subjected to a printing or stamping method for decoration purposes. Then the finished component is placed in the cavity of an injection moulding machine. Then the visible surface region of the decorative layer 2 is sealed by means of a stamp in order to prevent the supporting layer from penetrating into the visible region of the kicking plate 1. The stamp is provided with a coating in order on the one hand to protect the decorative layer from scratching, and on the other hand in order to provide a better seal with respect to the supporting layer 3 which will be injection-moulded later. The decorative layer 2 is placed in a holder here the geometric dimensions of which correspond to the dimensions of the shrinkage pockets 4. This holder projects slightly over the side of the decorative layer 2 associated with the stamp.

## Claims

1. A plastic/metal composite (1), in particular for use in motor vehicles, having a decorative layer (2) made of metal and a plastic layer as a supporting layer (3) which is connected to the decorative layer (2) by means of a spraying, injection moulding or pressing method, **characterised in that** at the level of a peripheral region (2a) of the metallic decorative layer (2) at least one recess in the form of a shrinkage pocket (4) is provided in the supporting layer which enables relative movement between the decorative layer (2) and the supporting layer (3) during cooling in order to compensate different shrinkage characteristics of the decorative layer (2) and the supporting layer (3) during cooling after production.

2. The plastic/metal composite (1) according to Claim 1, **characterised in that** the shrinkage pockets (4) are arranged such that they lay open at least a partial section of the peripheral region (2a) of at least one face side (5) of the decorative layer (2), in particular of the face side (5) in the region of the greatest shrinkage of the supporting layer (3).

3. The plastic/metal composite (1) according to Claim 1, **characterised in that** the dimensions of the shrinkage pocket (4), in particular a space (R) left free by the shrinkage pocket (4) between the face side (5) of the decorative layer (2) and the supporting layer (3), are adapted to a shrinkage ratio of the decorative layer (2) to the supporting layer (3).

4. The plastic/metal composite (1) according to any of Claims 1 to 3, **characterised in that** the shrinkage pocket (4) has at least a width (B) which corresponds to half of the difference between the shrinkage paths respectively covered by the decorative layer (2) and the supporting layer (3) which result from the different longitudinal expansion coefficients of the decorative layer (2) and the supporting layer (3).

5. The plastic/metal composite (1) according to any of the preceding claims, **characterised in that** the shrinkage pocket (4) is formed in an end region facing towards the supporting layer (3) following the contours of the decorative layer (2).

6. The plastic/metal composite (1) according to any of the preceding claims, **characterised in that** the supporting layer (3) has at least one spring element (6) which allows compensation movements of the supporting layer (3) laterally to the longitudinal extension of the decorative layer (2).

7. The plastic/metal composite (1) according to Claim 6, **characterised in that** the spring element (6) is formed by a bar, in particular S-shaped.

8. The plastic/metal composite (1) according to Claim 6 or 7, **characterised in that** a number of spring elements (6) are formed in the supporting layer which are disposed in particular at equal intervals along the longitudinal extension of the composite (1).

9. The plastic/metal composite (1) according to any of the preceding claims, **characterised in that** the positioning means, in particular positioning lugs or hooks, are formed on the decorative layer (2) and/or the supporting layer (3).

10. The plastic/metal composite (1) according to any of the preceding claims, **characterised in that** the supporting layer (3) is designed to be slanted in the region of contact with or covering of the decorative layer (2).

11. The plastic/metal composite (1) according to any of the preceding claims, **characterised in that** it has at least one coverning element which can be inserted into the shrinkage pocket (4) such that it at least partially covers the shrinkage pocket (4).

12. A method of producing a plastic/metal composite (1) made up of at least one metallic decorative layer (2) and at least one supporting layer (3) made of plastic, in particular according to any of Claims 1 to 10, **characterised in that** by injection-moulding around the metallic decorative layer (2) using a spraying, injection moulding or pressing method, a supporting layer (3) is connected to the metallic decorative layer (2), while injection-moulidng around the region of the end sections of the metallic decorative layer (2) at least one recess being provided in the supporting layer (3) in the form of a shrinkage pocket (4) which enables relative movement between the decorative layer (2) and the supporting layer (3) during cooling in order to compensate different shrinkage characteristics of the decorative layer (2) and the supporting layer (3) during cooling after production.

13. The method according to Claim 12, **characterised in that** at least one spring element (6) is formed in the supporting layer (3) while injection-moulding in order to enable compensating movements laterally to the longitudinal extension of the composite (1).

14. The method according to Claim 12 or 13, **characterised in that** before or during injection-moulding, positioning lugs are formed at the decorative layer (2) and/or the supporting layer (3).

15. The method according to any of Claims 12 to 14, **characterised in that** during or after cooling of the plastic/metal composite (1), at least one covering element is inserted into the shrinkage pocket.

## Patentansprüche

1. Kunststoff-Metall-Verbundkörper (1), insbesondere zum Einsatz in Kraftfahrzeugen, mit einer Dekorschicht (2) aus Metall und einer Kunststoffschicht als Trägerschicht (3), welche über ein Spritz-, Spritzguss- oder Pressverfahren mit der Dekorschicht (2) verbunden ist, **dadurch gekennzeichnet, dass** auf Höhe eines Randbereiches (2a) der metallischen Dekorschicht (2) mindestens eine Aussparung in der Form einer Schrumpfungstasche (4) in der Trägerschicht vorgesehen ist, die eine Relativbewegung zwischen Dekorschicht (2) und Trägerschicht (3) während des Abkühlens ermöglicht, um ein unterschiedliches Schrumpfungsverhalten von Dekorschicht (2) und Trägerschicht (3) während des Abkühlens nach der Fertigung auszugleichen.

2. Kunststoff-Metall-Verbundkörper (1) nach Anspruch 1, **dadurch gekennzeichnet, dass** die Schrumpfungstaschen (4) so angeordnet sind, dass sie zumindest einen Teilabschnitt des Randbereiches (2a) mindestens einer Stirnseite (5) der Dekorschicht (2), insbesondere der Stirnseite (5) in dem Bereich der größten Schrumpfung der Trägerschicht (3), freilegt.

3. Kunststoff-Metall-Verbundkörper (1) nach Anspruch 1, **dadurch gekennzeichnet, dass** die Abmessungen der Schrumpfungstasche (4) insbesondere ein durch die Schrumpfungstasche (4) zwischen Stirnseite (5) der Dekorschicht (2) und Trägerschicht (3) freibleibender Raum
(R), an ein Schrumpfungsverhältnis Dekorschicht (2) zu Trägerschicht (3) angepasst sind.

4. Kunststoff-Metall-Verbundkörper (1) nach einem der Ansprüche 1 bis 3, **dadurch gekennzeichnet, dass** die Schrumpfungstasche (4) mindestens eine Breite (B) aufweist, die der Hälfte der Differenz der von der Dekorschicht (2) und der Trägerschicht (3) jeweils zurückgelegten Schrumpfungswege, die sich aus unterschiedlichen Längenausdehnungskoeffizienten von Dekorschicht (2) und Trägerschicht (3) ergeben, entspricht.

5. Kunststoff-Metall-Verbundkörper (1) nach einem der vorherigen Ansprüche, **dadurch gekennzeichnet, dass** die Schrumpfungstasche (4) in einem Endbereich, der in Richtung der Trägerschicht (3) weist, den Konturen der Dekorschicht (2) folgend ausgebildet ist.

6. Kunststoff-Metall-Verbundkörper (1) nach einem der vorherigen Ansprüche, **dadurch gekennzeichnet, dass** die Trägerschicht (3) wenigstens ein Federelement (6) aufweist, das Kompensationsbewegungen der Trägerschicht (3) seitlich zu der Längserstreckung der Dekorschicht (2) erlaubt.

7. Kunststoff-Metall-Verbundkörper (1) nach Anspruch 6, **dadurch gekennzeichnet, dass** das Federelement (6) durch einen insbesondere S-förmigen Stab gebildet ist.

8. Kunststoff-Metall-Verbundkörper (1) nach Anspruch 6 oder 7, **dadurch gekennzeichnet, dass** eine Anzahl von Federelementen (6) in der Trägerschicht (3) ausgebildet sind, die insbesondere in gleichen Intervallen entlang der Längserstreckung des Grundkörpers (1) angeordnet sind.

9. Kunststoff-Metall-Verbundkörper (1) nach einem der vorherigen Ansprüche, **dadurch gekennzeichnet, dass** die Positioniermittel, insbesondere Positioniernasen oder Haken, an der Dekorschicht (2) und/oder der Trägerschicht (3) ausgebildet sind.

10. Kunststoff-Metall-Verbundkörper (1) nach einem der vorherigen Ansprüche, **dadurch gekennzeichnet, dass** die Trägerschicht (3) ausgebildet ist, um in dem Bereich, der in Kontakt mit der Dekorschicht (2) steht oder diese überdeckt, geneigt zu sein.

11. Kunststoff-Metall-Verbundkörper (1) nach einem der vorherigen Ansprüche, **dadurch gekennzeichnet, dass** er wenigstens ein Verzierelement aufweist, das in die Schrumpfungstasche (4) eingesetzt werden kann, so dass es zumindest teilweise die Schrumpfungstasche (4) abdeckt.

12. Ein Verfahren zur Herstellung eines aus wenigstens einer metallischen Dekorschicht (2) und wenigstens einer Trägerschicht (3) aus Kunststoff bestehenden Kunststoff-Metall-Verbundkörpers (1), insbesondere nach einem der Ansprüche 1 bis 11, **dadurch gekennzeichnet, dass** durch Hinterspritzen der metallischen Dekorschicht (2) mittels Spritz-, Spritzguss- oder Pressverfahrens eine Trägerschicht (3) mit der metallischen Dekorschicht (2) verbunden wird, wobei während des Hinterspritzens im Bereich der Endabschnitte der metallischen Dekorschicht (2) mindestens eine Aussparung in der Form einer Schrumpfungstasche (4) in der Trägerschicht (3) vorgesehen wird, die eine Relativbewegung zwischen der Dekorschicht (2) und der Trägerschicht (3) während des Abkühlens ermöglicht, um ein unterschiedliches Schrumpfungsverhalten von Dekorschicht (2) und Trägerschicht (3) während des Abkühlens nach der Fertigung auszugleichen.

13. Verfahren nach Anspruch 12, **dadurch gekennzeichnet, dass** wenigstens ein Federelement (6) in der Trägerschicht (3) während des Spritzgießens ausgebildet wird, um Kompensationsbewegungen seitlich zu der Längserstreckung des Verbundkörpers (1) zu ermöglichen.

14. Verfahren nach Anspruch 12 oder 13, **dadurch gekennzeichnet, dass** vor dem Spritzgießen Positioniernasen an der Dekorschicht (2) und/oder der Trägerschicht (3) ausgebildet werden.

15. Verfahren nach einem der Ansprüche 12 bis 14, **dadurch gekennzeichnet, dass** während oder nach dem Abkühlen des Kunststoff-Metall-Verbundkörpers (1) mindestens ein Verzierelement in die Schrumpfungstasche (4) eingesetzt wird.

## Revendications

1. Composite plastique/métal (1), particulièrement pour utilisation dans les véhicules à moteur, ayant une couche décorative (2) faite en métal et une couche plastique comme une couche de support (3) qui est connectée à la couche décorative (2) par moyen d'une méthode de pulvérisation, de moulage par injection ou de pressage, **caractérisé en ce qu'**au niveau d'une région périphérique (2a) de la couche décorative métallique (2) au moins un dégagement dans la forme d'une poche de rétrécissement (4) est pourvu dans la couche de support qui permet le mouvement relatif entre la couche décorative (2) et la couche de support (3) pendant le refroidissement pour compenser les différentes caractéristiques de rétrécissement de la couche décorative (2) et de la couche de support (3) pendant le refroidissement après la production.

2. Composite plastique/métal (1) selon la revendication 1, **caractérisé en ce que** les poches de rétrécissement (4) sont arrangées de sorte qu'elles laissent ouverte au moins une portion de la région périphérique (2a) d'au moins une face latérale (5) de la couche décorative (2), particulièrement la face latérale (5) dans la région du plus grand rétrécissement de la couche de support (3).

3. Composite plastique/métal (1) selon la revendication 1, **caractérisé en ce que** les dimensions de la poche de rétrécissement (4), particulièrement un espace (R) reste libre par la poche de rétrécissement (4) entre la face latérale (5) de la couche décorative (2) et la couche de support (3), sont adaptées à un rapport de rétrécissement de la couche décorative (2) à la couche de support (3).

4. Composite plastique/métal (1) selon l'une quelconque des revendications 1 à 3, **caractérisé en ce que** la poche de rétrécissement (4) présente au moins une largeur (B) qui correspond à moitié de la différence entre les voies de rétrécissement couvertes respectivement par la couche décorative (2) et la couche de support (3) qui résulte des coefficients d'expansion longitudinaux différents de la couche décorative (2) et de la couche de support (3).

5. Composite plastique/métal (1) selon l'une quelconque des revendications antérieures, **caractérisé en ce que** la poche de rétrécissement (4) est formée dans une région d'extrémité orientée vers la couche de support (3) suivant les contours de la couche décorative (2).

6. Composite plastique/métal (1) selon l'une quelconque des revendications antérieures, **caractérisé en ce que** la couche de support (3) présente au moins un élément de ressort (6) qui permet les mouvements de compensation de la couche de support (3) latéralement à l'extension longitudinale de la couche décorative (2).

7. Composite plastique/métal (1) selon la revendication 6, **caractérisé en ce que** l'élément de ressort (6) est formé d'une barre, particulièrement en forme de S.

8. Composite plastique/métal (1) selon la revendication 6 ou 7, **caractérisé en ce qu'**un nombre d'éléments de ressort (6) sont formés dans la couche de support qui sont disposés particulièrement aux intervalles égales le long de l'extension longitudinale du composite (1).

9. Composite plastique/métal (1) selon l'une quelconque des revendications antérieures, **caractérisé en ce que** le moyen de positionnement, particulièrement les ergots de positionnement ou crochets, sont formés sur la couche décorative (2) et/ou la couche de support (3).

10. Composite plastique/métal (1) selon l'une quelconque des revendications antérieures, **caractérisé en ce que** la couche de support (3) est désignée pour être inclinée dans la région de contact ou couverte de la couche décorative (2).

11. Composite plastique/métal (1) selon l'une quelconque des revendications antérieures, **caractérisé en ce qu'**il présente au moins un élément de recouvrement qui peut être inséré dans la poche de rétrécissement (4) de sorte qu'il au moins partialement couvre la poche de rétrécissement (4).

12. Méthode pour produire un composite plastique/métal (1) fait d'au moins une couche décorative métallique (2) et au moins une couche de support (3) faite en plastique, particulièrement selon l'une quelconque des revendications 1 à 10, **caractérisé en ce que** par moulage par injection autour la couche décorative métallique (2) utilisant une méthode de pulvérisation, de moulage par injection ou de pressage, une couche de support (3) est connectée à la couche décorative métallique (2), pendant qu' au moulage par injection autour la région des portions d'extrémité de la couche décorative métallique (2) au moins un dégagement dans la forme d'une poche de rétrécissement (4) est pourvu dans la couche de support (3) qui permet le mouvement relatif entre la couche décorative (2) et la couche de support (3) pendant le refroidissement pour compenser les différentes caractéristiques de rétrécissement de la couche décorative (2) et de la couche de support (3) pendant le refroidissement après la production.

13. Méthode selon la revendication 12, **caractérisé en ce qu'**au moins un élément de ressort (6) est formé dans la couche de support (3) pendant le moulage par injection pour permettre les mouvements de compensation latéralement à l'extension longitudinale de du composite (1).

14. Méthode selon la revendication 12 ou 13, **caractérisé en ce qu'**avant ou pendant le moulage par injection, les ergots de positionnement sont formés à la couche décorative (2) et/ou la couche de support (3).

15. Méthode selon l'une quelconque des revendications 12 à 14, **caractérisé en ce que** pendant et après le refroidissement du composite plastique/métal (1), au moins un élément de recouvrement est inséré dans la poche de rétrécissement.
